# EUROPEAN PATENT SPECIFICATION

(11) **EP 3 276 482 B1**
(45) Date of publication and mention of the grant of the patent: **04.11.2020**
(21) Application number: 17177172.8
(22) Date of filing: 21.06.2017
(51) Int. Cl.: G06F 3/14, H04L 29/06, G09G 5/00, G09G 5/14

(54) **INFORMATION PROCESSING APPARATUS**
INFORMATIONSVERARBEITUNGSVORRICHTUNG
APPAREIL DE TRAITEMENT D'INFORMATIONS

(30) Priority: 26.07.2016 JP 2016146707
(43) Date of publication of application: 31.01.2018
(73) Proprietor: Fujitsu Component Limited, Tokyo 140-0002 (JP)
(72) Inventor: NAGAO, Naoyuki, Shinagawa-ku, Tokyo 140-0002 (JP)
(74) Representative: Haseltine Lake Kempner LLP

(56) References cited:
- US-A1- 2009 094 395
- US-A1- 2010 100 652
- US-A1- 2013 139 234

## Description

### FIELD

The present invention relates to an information processing apparatus.

### BACKGROUND

Conventionally, there has been known a system in which a KVM (k: keyboard, V: Video, M: mouse) switch is connected between a plurality of servers and one set of a keyboard, a mouse and a monitor (hereinafter referred to as a console), and the servers can be managed with the use of the single console. Especially, in a data center, the plurality of servers, a console drawer (i.e., a console installed in a drawer of a rack) and the KVM switch are mounted on a single rack, and many such racks are installed (e.g. see Japanese Laid-open Patent Publication No. 2006-185419).

This system does not require a console for each server and can manage the plurality of servers by using the single console. Therefore, it is possible to reduce the number of workers and consoles that manage the plurality of servers, which can reduce introduction costs and running costs of the system.

US 2009/094395 A1 discloses a KVM switch which receives data from computers and generates images based on the received data.

### SUMMARY

However, in this system, there is a problem that the plurality of servers cannot be maintained at the same time since the plurality of servers are aggregated into the single console.

When the console is prepared for each server, it is possible to perform the work on the respective servers simultaneously in parallel, and hence the working time to all the servers can be shortened. For example, when the state transition of a server is stagnant, a single worker easily performs the work on another server using the console while paying attention to the state transition of the server using another console.

On the other hand, when a plurality of consoles are aggregated into the single console, the single worker cannot monitor the plurality of servers at the same time. To monitor the plurality of servers, one server must be disconnected from the KVM switch and connected to another console. As a result, to monitor the plurality of servers, a waste work such as attachment and detachment of wirings occurs.

It is desirable to provide an information processing apparatus that can maintain the plurality of servers at the same time while keeping a function of a console.

The present invention is defined by the appended independent claim, to which reference should now be made. Specific embodiments are defined in the dependent claims.

### BRIEF DESCRIPTION OF DRAWINGS

Embodiments of the invention are set out, by way of example only, with reference to the following drawings, in which:
FIG. 1 is a diagram illustrating the configuration of a system including an information processing apparatus according to a first embodiment;
FIG. 2 is a diagram illustrating the configuration of a PC 4;
FIG. 3 is a functional block diagram of the PC 4;
FIGs. 4A and 4B are diagrams illustrating examples of drivers;
FIG. 5A is a diagram illustrating a state where image display windows 40 and character input windows 41 are synthesized with a desktop image 42 of an OS 15a;
FIG. 5B is a diagram illustrating a state where video information acquired from a converter 3 is directly output to a LCD 21;
FIG. 6 is a functional block diagram of the PC 4 according to a second embodiment;
FIGs. 7A to 7C are diagrams illustrating examples of a screen of a display 55;
FIG. 8 is a diagram illustrating a method of using the PC 4 at a position in front of a rack;
FIGs. 9A and 9B are diagrams illustrating examples of a database stored into an external communication part 59;
FIG. 10A is a side view illustrating a position relationship between a rack 200 and the PC 4;
FIG. 10B is a top view illustrating the position relationship between the rack 200 and the PC 4; and
FIG. 11 is a diagram illustrating an example in which names or IDs of servers are displayed on a screen of the PC 4.

### DESCRIPTION OF EMBODIMENTS

A description will now be given of an embodiment according to the present invention with reference to drawings.

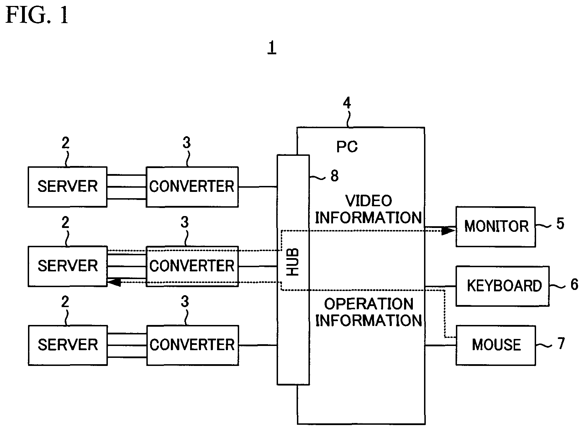

(First Embodiment) FIG. 1 is a diagram illustrating the configuration of a system including an information processing apparatus according to a first embodiment. A system 1 includes a plurality of servers 2, a plurality of converters 3, a PC 4, a monitor 5, a keyboard 6 and a mouse 7. The system 1 is mounted on a rack, not shown, for example. Each converter 3 is connected between each server 2 and the PC 4. The PC 4 is connected to the monitor 5, the keyboard 6 and the mouse 7. A hub 8 may be built in the PC 4, and may be externally mounted on the PC 4. The PC 4 is a portable information processing apparatus such as a note PC, a tablet PC, or a smartphone, for example.

The converter 3 converts a video signal which the server 2 outputs into video information that can be input to the PC 4, and outputs the video information to the PC 4. Moreover, the converter 3 converts operation information of the keyboard 6 and the mouse 7 output from the PC 4 into an operation signal that can be input to the server 2, and outputs the operation signal to the server 2. The converter 3 is a so-called IP-KVM switch, for example. The PC 4 is connected to the plurality of converter 3 by way of the hub 8 of USB (Universal Serial Bus) or Ethernet, and acquires the video information from the plurality of converters 3 simultaneously in parallel. The PC 4 may be connected to the plurality of converter 3 by wireless communication. Moreover, the PC 4 may have the converters 3 built in.

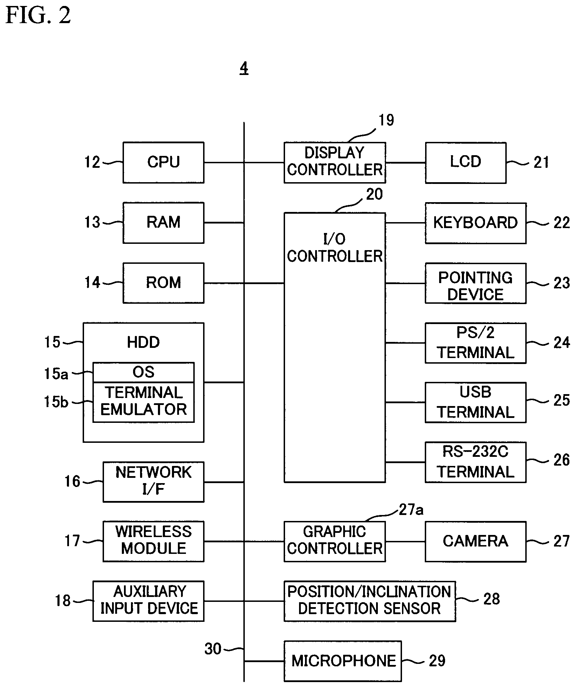

FIG. 2 is a diagram illustrating the configuration of the PC 4. The PC 4 includes: a CPU 12 that controls the whole operation of the PC 4; a RAM 13 that functions as a working area; a ROM 14 and a HDD (Hard Disk Drive) 15 each of which stores various data and programs; a network interface (I/F) 16; a wireless module 17; and an auxiliary input device 18. Moreover, the PC 4 includes a display controller 19, an I/O controller 20, a liquid crystal display (LCD) 21, a keyboard 22, a pointing device 23, a PS/2 terminal 24, a USB terminal 25, an RS-232C terminal 26, a graphic controller 27a, a camera 27, a position/inclination detection sensor 28 and a microphone 29. Connected to via a bus 30 are the CPU 12, the RAM 13, the ROM 14, the HDD 15, the network I/F 16, the wireless module 17, the auxiliary input device 18, the display controller 19, the I/O controller 20, the graphic controller 27a, the position/inclination detection sensor 28 and the microphone 29. The LCD 21 is connected to the display controller 19. The keyboard 22, the pointing device 23, the PS/2 terminal 24, the USB terminal 25 and the RS-232C terminal 26 are connected to the I/O controller 20. The graphic controller 27a is connected to the camera 27. The keyboard 22 and the pointing device 23 serve as an input device. The auxiliary input device 18 serves as an instruction device.

The HDD 15 stores OS (Operating System) 15a, and a terminal emulator 15b that is software for operating a serial console switch. Here, the OS 15a and the terminal emulator 15b may be stored into the ROM 14. To realize a function of the hub 8 of FIG. 1, the PC 4 may include a plurality of network I/Fs 16 or a plurality of USB terminals 25 which are connected to the plurality of converter 3. When the hub 8 of FIG. 1 is connected to the outside of the PC 4, the hub 8 is connected to the network I/F 16 or the USB terminal 25.

The wireless module 17 is used at the time of the wireless communication with the converter 3. The auxiliary input device 18 is a switch such as an ON/OFF switch or a volume switch which is provided on a housing of the PC 4, for example. The display controller 19 directly outputs the video information from the converter 3 to the LCD 21 or outputs a synthetic image (i.e., a synthetic image of a bitmap image converted from the video information from the converter 3 and a desktop image of the OS 15a) to the LCD 21, in accordance with control from the OS 15a.

The I/O controller 20 outputs the operation information input from the keyboard 22 and the pointing device 23 to the converter 3 through the OS 15a, or directly outputs the operation information to the converter 3 without passing through the OS 15a. The keyboard 22 is a built-in internal keyboard which is built in the PC 4, and the pointing device 23 is a built-in pad or a built-in mouse which is built in the PC 4. Here, when the PC 4 is the tablet PC or the smartphone, the keyboard 22 is a software keyboard and the pointing device 23 is a touch panel.

Each of the PS/2 terminal 24, the USB terminal 25 and the RS-232C terminal 26 is used to connect a peripheral device thereto, and a desired external keyboard and a desired external mouse can be connected to the PS/2 terminal 24 or the USB terminal 25. The serial console switch can be connected to the RS-232C terminal 26. Moreover, the serial console switch can be connected to the USB terminal 25 via a USB/RS-232C conversion cable. The graphic controller 27a converts an image taken with the camera 27 into a predetermined data format such as JPEG (joint Photographic Experts Group). The camera 27 is a built-in camera of the PC 4, but may be an external camera when the PC 4 does not have the camera 27.

The position/inclination detection sensor 28 is used to detect a location (three-dimensional coordinates) and an inclination of the PC 4, and is an acceleration sensor, a geomagnetic sensor, a pressure sensor and a triaxial gyro sensor and so on, for example. When the PC 4 is the note PC, it does not have the position/inclination detection sensor 28. However, when the PC 4 is the tablet PC or the smartphone, it has the position/inclination detection sensor 28, and it is therefore possible to use the position/inclination detection sensor 28. For example, it is assumed that a reference position is decided to any location in a data center in advance and a worker moves along with the PC 4. The CPU 12 calculates the steps of the worker to be moved by using the acceleration sensor, calculates a moving distance by multiplying a predetermined stride by the steps, and acquires a direction of the movement of the worker using the geomagnetic sensor. Thereby, the CPU 12 can acquire relative position information of the PC 4 from the reference position. Here, by using the pressure sensor, it is also possible to measure the height of the PC 4 from the change of atmospheric pressure.

The microphone 29 is used to correct the location information of the detected PC 4. For example, the microphone 29 acquires an acoustic signal output from the speaker provided in the data center in which the rack is installed. The CPU 12 analyzes the acoustic signal acquired by the microphone 29 to extract a position ID, and accesses a database with the extracted position ID as a key to acquire accurate position information. Here, the database including the position ID and the position information associated with each other is stored in advance in the HDD 15 or in an external server.

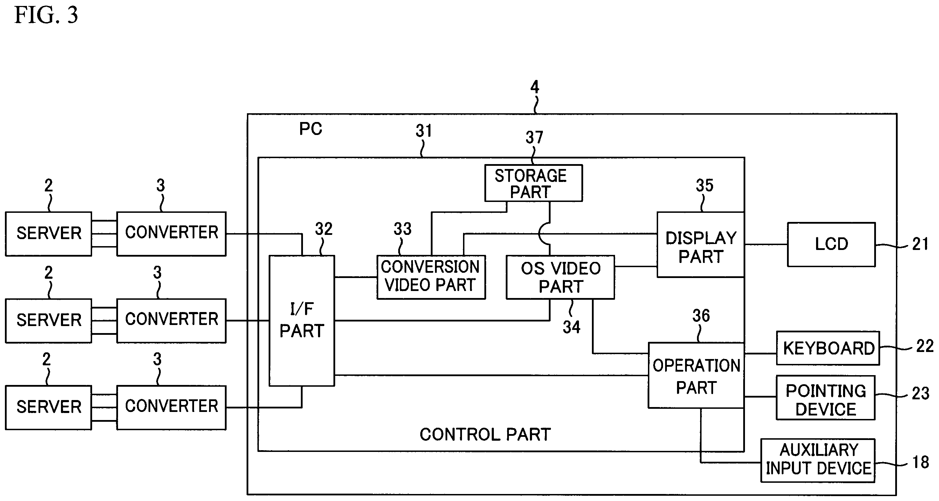

FIG. 3 is a functional block diagram of the PC 4. The PC 4 includes a control part 31. The control part 31 includes the CPU 12, the RAM 13, the ROM 14, the HDD 15, the network I/F 16, the wireless module 17, the display controller 19, the I/O controller 20 and the bus 30.

The control part 31 includes: an I/F part 32 that is connected to the plurality of converter 3, acquires the video information from the plurality of converters 3 simultaneously in parallel; a conversion video part 33 that directly outputs the video information acquired from each converter 3 to a display part 35; an OS video part 34 that converts the video information acquired from the converter 3 into the bitmap image, and displays the bitmap image on a part or all of an operation screen of the PC 4 as an operation screen of the server in a window format; the display part 35 that selects the video information output from any one of the conversion video part 33 or the OS video part 34 in accordance with an instruction from the OS video part 34, and outputs the video information to the LCD 21; an operation part 36 that outputs the operation information input from the keyboard 22 and the pointing device 23 to any one of the I/F part 32 or the OS video part 34 in accordance with an instruction from the auxiliary input device 18; and a storage part 37 that stores the video information of the conversion video part 33 and the OS video part 34 as a log.

A function of the I/F part 32 as a transmitting and receiving means is realized by the CPU 12, the RAM 13, the ROM 14, the HDD 15, the network I/F 16 and the wireless module 17 of FIG. 2. A function of the conversion video part 33 as a first output means is realized by the CPU 12 which directly transmits the video information from the network I/F 16 or the wireless module 17 to the display controller 19. A function of the OS video part 34 as a synthesis means is realized by the CPU 12 executing the OS 15a, the RAM 13, the ROM 14 and the HDD 15. A function of the display part 35 as a selection means is realized by the display controller 19. A function of the operation part 36 as a second output means is realized by the I/O controller 20. A function of the storage part 37 is realized by the ROM 14 and the HDD 15.

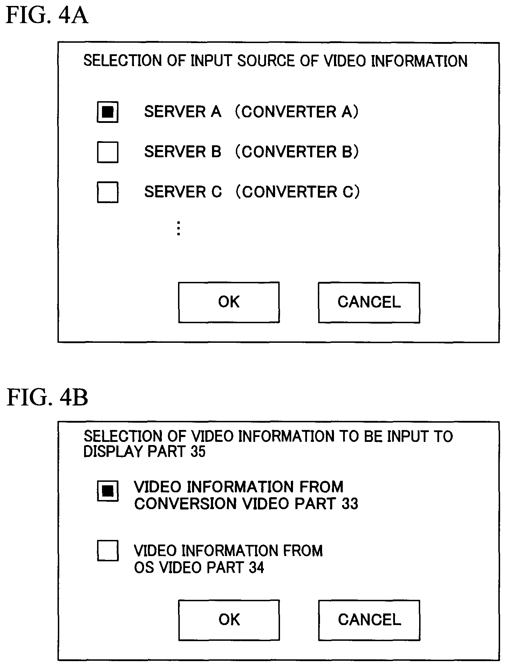

The video information input from the converter 3 is extracted by the I/F part 32. The I/F part 32 distributes the video information to the conversion video part 33 and the OS video part 34. Moreover, the I/F part 32 receives the video information from an input source (i.e., the server or the converter) selected by a driver that runs on the OS 15a, as illustrated in FIG. 4A. When the video information is transmitted to the conversion video part 33, the driver can select a single server or a single converter. When the video information is transmitted to the OS video part 34, the driver can select the plurality of servers or the plurality of converters.

The OS video part 34 outputs a selection instruction of the video information output from the conversion video part 33 and the OS video part 34 to the display part 35. This selection instruction is set by a driver that runs on the OS 15a as illustrated in FIG. 4B. The display part 35 selects the video information output from any one of the conversion video part 33 and the OS video part 34 in accordance with the selection instruction from the OS video part 34, and outputs the selected video information to the LCD 21. Moreover, the OS video part 34 synthesizes an image display window 40 that displays the bitmap image into which the image information input from the I/F part 32 is converted, and a character input window 41 for inputting the operation information to the server 2 with an image (e.g. a background image such as a desktop image) of the OS 15a. The OS video part 34 continuously updates the bitmap image displayed on the image display window 40 at a cycle of 100 ms, for example. Thereby, it is possible to provide the worker with an environment as if displaying the video signal from the server 2.

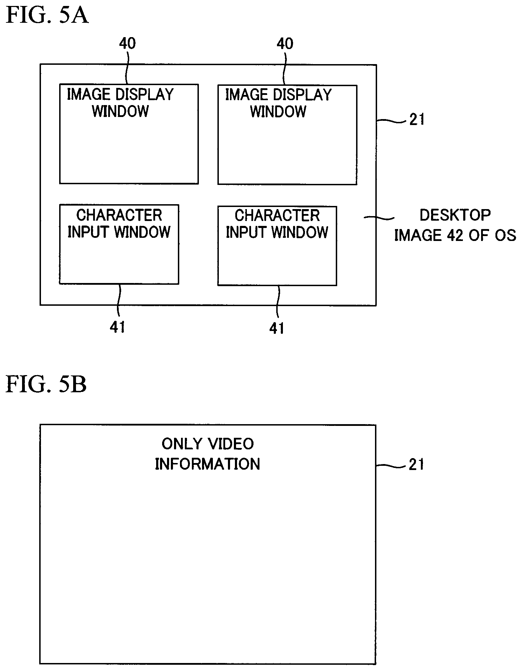

FIG. 5A is a diagram illustrating a state where the image display windows 40 and the character input windows 41 are synthesized with a desktop image 42 of the OS 15a. FIG. 5B is a diagram illustrating a state where the video information acquired from the converter 3 is directly output to the LCD 21. In FIG. 5A, in order to display bitmap images corresponding to the video information from two converters 3 (i.e., two servers 2), two image display windows 40 are synthesized with the desktop image 42. Moreover, in order to input the operation information to the two servers 2, two character input windows 41 are synthesized with the desktop image 42. Therefore, the worker selects any one of the two image display windows 40 displaying the operation screens of the two servers 2 as an operation object, and hence can operate the selected server 2 via the converter 3. When the server 2 of the operation object is switched, it is possible to switch the server 2 of the operation object to the desired server 2 only by clicking the image display window 40 that displays the operation screen of the desired server 2 or the character input window 41 corresponding to the image display window 40.

Referring again to FIG. 3, the operation part 36 acquires the operation information from the keyboard 22 and the pointing device 23, and outputs the operation information to any one of the I/F part 32 or the OS video part 34 in accordance with the instruction from the auxiliary input device 18. When an ON signal is input from the auxiliary input device 18, the operation part 36 outputs the operation information to the OS video part 34 and the OS video part 34 outputs adjusted operation information to the I/F part 32. The adjusted operation information indicates the operation information input to the character input window 41 of FIG. 4A, for example. When an OFF signal is input from the auxiliary input device 18, the operation part 36 directly outputs the operation information to the I/F part 32.

As described above, according to the PC 4 of the present embodiment, while maintaining the function displaying the operation screen of the single server 2 on the operation screen of the PC 4 itself, it is possible to display the operation screens of the plurality of servers 2 on the operation screen of the PC 4 itself. As a result, it is possible to maintain the plurality of servers at the same time.

In the present embodiment, since it is possible to access the server 2 by using the PC 4 instead of the console drawer, there are other advantages other than the above-mentioned merits.

Firstly, in the console drawer, since the screen is directed to a front side of the rack, when the worker connects a LAN cable to a rear surface of the server, the worker must return to the front side of the rack to see the screen, and hence there is a problem that it is not possible to check a change situation of the screen in real time. For this reason, two workers are required to perform connection work of the LAN cable and check work of the screen.

On the other hand, in the present embodiment, since the PC 4 can be moved toward a rear side of the server 2 or the rack, even when the worker connects the LAN cable to the rear surface of the server, the worker can check the change situation of the screen in real time. As a result, the single worker can perform the connection work of the LAN cable and the check work of the screen.

Secondly, since the console drawer aggregates the plurality of consoles into the single console, no personal preference is reflected to the operability of the console, and there is a problem that a decrease in work efficiency may be caused.

For example, the operator can adjust design and a moving speed of a mouse cursor displayed on the screen to a desired setting. However, the setting of the mouse cursor depends on the preference of the operator and the adjusted setting is not necessarily suitable for other operators, but the adjusted setting is stored into the server. Therefore, in an environment in which the console drawer is shared, it is not preferable for each operator to adjust the setting of the mouse cursor.

In particular, the console drawer is used for not only a regular maintenance work of the server but also a temporary or emergency management work of the server. In a situation where quick treatment to the server is required, the worker needs to complete the work in a minimum time. However, when the setting of the mouse cursor is not suitable for the preference of the worker, the worker must perform the management work of the server while feeling stress, which causes a work error.

On the other hand, in the present embodiment, the PC 4 includes the PS/2 terminal 24 and the USB terminal 25 that can connect the external keyboard or the external pointing device, and the setting of the mouse cursor can be individually stored into the PC 4. It is therefore possible to reflect the personal preference to the operability of the console and prevent a decrease in work efficiency.

Thirdly, when the serial console switch is used for connection to the server, the console drawer and the PC need to be used together and hence the cost for introducing the system increases.

In a method of connecting a plurality of serial console switches connected to the servers to another single serial console switch, various data generated on the serial console switches can be stored into internal or external storage mediums of the respective serial console switches as log files. However, since the console drawer and the KVM switch does not include a function that acquires the log files from the storage mediums or displays the log files, a separate PC is required to acquire or display the log files, and a duplicate cost of simultaneous use of the console drawer and the PC is generated. The reason for simultaneously using the PC is to acquire or display the log files, and that a terminal emulator, which is realized by software running on the PC and cannot be realized by the console drawer and the KVM switch, is required to operate the serial console switch.

Since the console drawer and the PC need to be used together, the cost for introducing the system increases. Moreover, due to a difference in operability between the console drawer, and a keyboard and a mouse of the PC, the decrease in work efficiency may be caused.

On the other hand, in the present embodiment, when the serial console switch is used for connection to the server, since the PC 4 includes the RS-232C terminal 26, it is possible to connect the serial console switch to the RS-232C terminal 26 via a serial cable. Alternatively, since the PC 4 includes the USB terminal 25, it is possible to connect the serial console switch to the USB terminal 25 via the USB/RS-232C conversion cable. Moreover, since the PC 4 includes the terminal emulator 15b for operating the serial console switch, it is possible to acquire or display the log files from the storage medium in the serial console switch.

As a result, even when the serial console switch is used, the console drawer and the PC 4 do not need to be used together, and it is possible to suppress the cost for introducing the system. Moreover, since the console drawer and the PC 4 do not need to be used together, it is possible to eliminate the decrease in work efficiency due to the difference in operability of the console drawer and the PC.

(Second Embodiment) In an environment where a plurality of racks having the same specification are arranged and each rack is equipped with a plurality of servers (especially servers having the same specification), even if the worker is in the vicinity of a desired server, there is a problem that the worker will not be able to find the desired server displayed on the screen from arrays of the servers. This is a kind of illusion phenomenon. Since the servers having the same specification have the same shape, the more the worker finds the servers having the same specification, the more the worker cannot find boundaries between the servers by assimilation, thereby causing this problem. Since it makes it difficult to find the desired server, a problem of accidentally manipulating another server also occurs.

Even if the worker arrives in front of the rack for the recovery of a server where a failure occurs, when the above illusion phenomenon occurs before the desired server is found, a problem that takes a lot of time before starting the work occurs. Prolonging the time from the trouble generation to the recovery is a large loss, and this illusion phenomenon is a mental pressure to the worker. Therefore, a means for solving this problem is desired.

For this reason, in a second embodiment, there will be explained an information processing apparatus that can easily find the desired server from among a rack group including the plurality of racks equipped with the plurality of servers.

A system including an information processing apparatus according to the second embodiment is the same as the system including the PC 4 in FIG. 1. The PC 4 according to the second embodiment is the tablet PC or the smartphone, for example, and has the configuration of the PC 4 illustrated in FIG. 2.

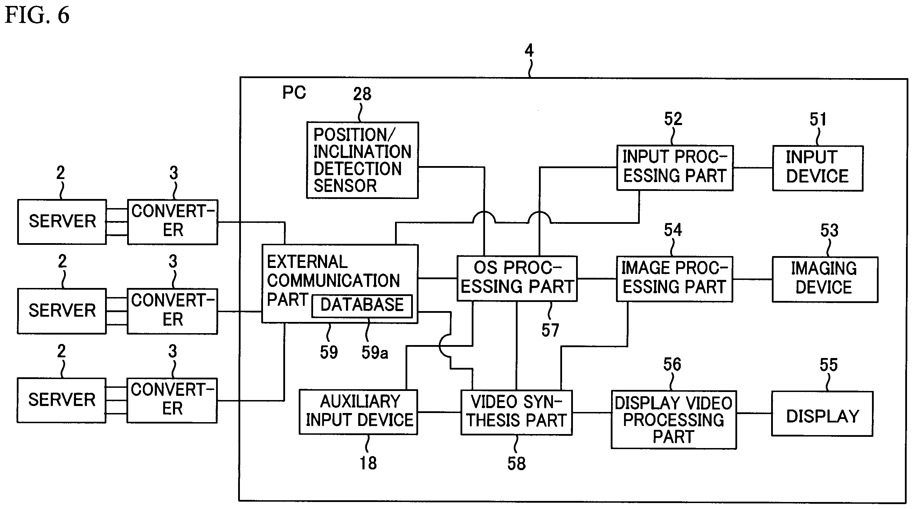

FIG. 6 is a functional block diagram of the PC 4 according to the second embodiment. As illustrated in FIG. 6, the PC 4 includes an input device 51; an input processing part 52; an imaging device 53; an image processing part 54; a display 55; a display video processing part 56; an OS processing part 57 that serves as a detection means and a display control means; a video synthesis part 58; an external communication part 59 that serves as an access means; the position/inclination detection sensor 28; and the auxiliary input device 18. The position/inclination detection sensor 28 and the auxiliary input device 18 are the same as those of FIG. 2.

The input device 51 is composed of the keyboard 22 and the pointing device 23 of FIG. 2. A function of the input processing part 52 is realized by the I/O controller 20. The imaging device 53 is the camera 27, for example. A function of the image processing part 54 is realized by the graphic controller 27a. The display 55 is the LCD 21, for example. A function of the display video processing part 56 is realized by the display controller 19. A function of the OS processing part 57 is realized by the CPU 12 running the OS 15a, the RAM 13, the ROM 14 and the HDD 15. A function of the video synthesis part 58 is realized by the CPU 12, the RAM 13, the ROM 14 and the HDD 15. A function of the external communication part 59 is realized by the CPU 12, the RAM 13, the ROM 14, the HDD 15, the network I/F 16 and the wireless module 17.

The input device 51 generates necessary information to perform the operation of the OS 15a. It is assumed that the generated information is a character and coordinates. When the input device 51 is the pointing device 23, the input device 51 outputs an change amount of two-dimensional coordinates corresponding to a moving amount to the input processing part 52. When the input device 51 is the touch panel, the input device 51 outputs the two-dimensional coordinates of a touch position to the input processing part 52. When the input device 51 is the keyboard 22, the input device 51 outputs address information assigned to an operation key to the input processing part 52.

The input processing part 52 converts the information of the character and the coordinates output from the input device 51 into data of a format that the OS processing part 57 can understand, and outputs the data to the OS processing part 57.

The imaging device 53 generates an image by taking a still image and a video image. When the imaging device 53 is the camera 27, the imaging device 53 converts the captured image into data of a format that the imaging processing part 54 can understand, and outputs the data to the imaging processing part 54.

The imaging processing part 54 converts the image received from the imaging device 53 into data of a format that the OS processing part 57 can understand, and outputs the data to the OS processing part 57, or outputs the image received from the imaging device 53 to the video synthesis part 58 without passing through the OS processing part 57.

The OS processing part 57 controls the input processing part 52 to receive the operation information from the input device 51, controls the imaging processing part 54 to acquire the image from the imaging device 53, and receives a detection result from the position/inclination detection sensor 28. The OS processing part 57 controls the video synthesis part 58 to display the image on the display 55. Moreover, the OS processing part 57 generates the desktop image of the OS 15a, and converts the information acquired from the input device 51 into a character, a cursor or a pointer. The OS processing part 57 synthesizes the image acquired from the imaging device 53 with the desktop image 42 as an image of the operation screen, converts the synthesized image into data of a format that the video synthesis part 58 can understand and outputs the converted data to the video synthesis part 58. The OS processing part 57 reads the condition of the auxiliary input device 18, and instructs the video synthesis part 58 to select data to be output to the display video processing part 56 from among the three output data described later, in accordance with the condition of the auxiliary input device 18.

The video synthesis part 58 converts the image generated by the OS processing part 57 into data (i.e., a first output data) of a format that the display video processing part 56 can understand, and outputs the data to the display video processing part 56. The video synthesis part 58 synthesizes the image input from the imaging processing part 54 with the image generated by the OS processing part 57, and converts the synthesized image into data (i.e., second output data) of the format that the display video processing part 56 can understand. Moreover, the video synthesis part 58 converts only the image input from the imaging processing part 54 into data (i.e., third output data) of the format that the display video processing part 56 can understand and in which the image generated by the OS processing part 57 is not displayed. The video synthesis part 58 can also output the condition of the auxiliary input device 18 to the OS processing part 57. The video synthesis part 58 selects the data to be output to the display video processing part 56 from among the first to the third output data in accordance with the condition of the auxiliary input device 18 and an instruction from the OS processing part 57.

The display video processing part 56 converts the data input from the video synthesis part 58 into a signal that the display 55 can understand. For example, the display video processing part 56 converts image data into an analog video signal or a digital video signal. The display 55 displays the signal input from the display video processing part 56.

The external communication part 59 has not only a function as a communication interface such as the network I/F 16 and the wireless module 17, but also a function of storing a database 59a in which various information is stored. The database 59a includes fields of three-dimensional coordinates. Here, XY-coordinates indicate the position of the rack, and a Z-coordinate indicates the position of the server in the rack identified by the XY-coordinates. The database 59a is built in the PC 4, but may be outside the PC 4.

The PC 4 according to the second embodiment also has the same function as the PC 4 according to the first embodiment. The external communication part 59 directly outputs the video information received from any one of the servers 2 to the video synthesis part 58. The OS processing part 57 converts the respective video information received from the plurality of servers 2 into the bitmap information via the external communication part 59, synthesizes the plurality of image display windows which display the converted images and the plurality of character input windows which input the operation information to the servers 2 with an image of the operation screen, and outputs the synthesis image to the video synthesis part 58. The video synthesis part 58 selects any one of the video information output from the external communication part 59 or the image synthesized by the OS video part 34 in accordance with the condition of the auxiliary input device 18, and outputs the selected one to the display 55 via the display video processing part 56. While the PC 4 according to the second embodiment also is maintaining the function displaying the operation screen of the single server 2 on the operation screen of the PC 4 itself, which the conventional console has, the PC 4 according to the second embodiment can display the operation screens of the plurality of servers 2 on the operation screen of the PC 4 itself.

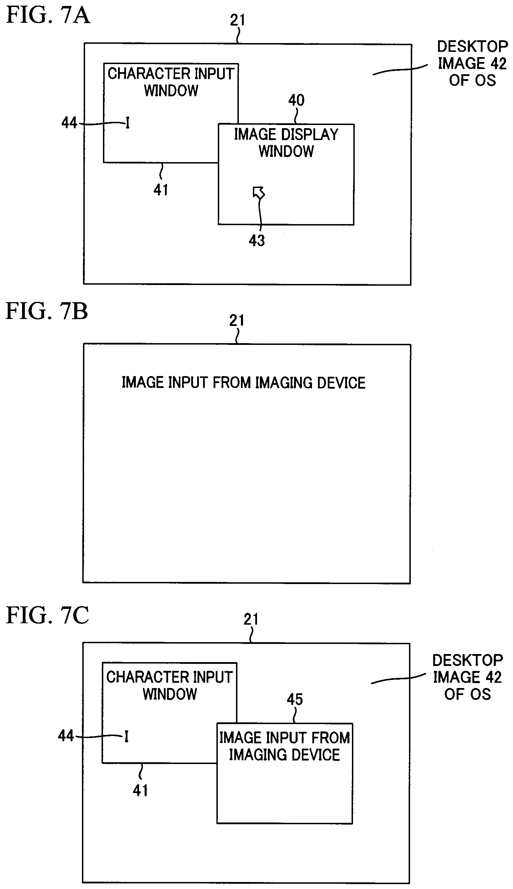

FIGs. 7A to 7C are diagrams illustrating examples of the screen of the display 55.

In FIG. 7A, a character input window 41 and an image display window 40 are displayed on a desktop image 42. When the pointing device 23 is moved, a pointer 43 moves accordingly. This is because the OS processing part 57 converts a displacement amount of the coordinates output from the input processing part 52 into the movement of the pointer 43. When the keyboard 22 is operated, a character is displayed at the position of a cursor 44.

With respect to the character input window 41 whose part is hidden in the image display window 40 as illustrated in FIG. 7A, by clicking the character input window 41 by the pointer 43, it is possible to replace a stacking order of the character input window 41 and the image display window 40, for example.

An image captured by the imaging device 53 is input to the OS processing part 57 via the imaging processing part 54, and is displayed on the image display window 40. The OS processing part 57 generates the desktop image 42 including the character input window 41 and the image display window 40, and outputs the desktop image 42 to the display 55 through the video synthesis part 58 and the display video processing part 56. The desktop image 42 including the character input window 41 and the image display window 40 is displayed on the display 55. Each of the sizes of the character input window 41 and the image display window 40 can be changed. When each of the character input window 41 and the image display window 40 is spread to a maximum size equivalent to the size of the desktop image 42, it is possible to hide display elements on the other window and the desktop image 42. To maximize the size of the operation screen, there are two ways to make the image display window 40 into the maximum size and to set a full-screen display displaying only the image by erasing a window frame.

FIG. 7A illustrates the screen of the display 55 when the auxiliary input device 18 (a switch) is off. On the other hand, when the switch is on, even if the desktop image generated by the OS processing part 57 is output to the video synthesis part 58, the video synthesis part 58 does not use the desktop image, and outputs only the image input from the imaging processing part 54 to the display video processing part 56. Only the image input from the imaging processing part 54 is displayed on the display 55. In FIG. 7B, the image input from the imaging processing part 54 becomes a state of the full-screen display.

Alternatively, when the switch is on, the video synthesis part 58 may synthesize image information input from the OS processing part 57 and the imaging processing part 54, and output the synthesized image information to the display video processing part 56. In this case, a domain 45 for displaying the image input from the imaging device 53 does not receive the control by the OS processing part 57. Therefore, when the pointer 43 is in a position illustrated in FIG. 7A, the pointer 43 is hidden by the domain 45 and is not displayed as illustrated in FIG. 7C. The domain 45 of FIG. 7C has no window frame unlike the image display window 40 of FIG. 7A. There are a case where the video synthesis part 58 reads the state of the auxiliary input device 18 directly and operates independently regardless of the instructions from the OS processing part 57, and a case where the video synthesis part 58 operates according to the instruction from the OS processing part 57.

Here, the following considers a purpose and a mechanism for instructing whether the operation information (i.e., the character and the coordinates) is directly output to the converter 3 or the operation information (e.g. the character input via the character input window 41 and the coordinates input via the image display window 40) adjusted by the OS processing part 57 is output.

The operation information input to the OS processing part 57 from the input device 51 of FIG. 6 through the input processing part 52 is displayed on the display 55 as the movement of the pointer, for example. The operation information of the keyboard 22 is also displayed at the position of the cursor 44 as the character.

When the converter 3 is an IP-KVM switch, the screen of the display 55 is the same as the screen situation illustrated in FIGs. 7A and 7B. That is, the image input to the OS processing part 57 from the converter 3 through the external communication part 59 is displayed on the image display window 40. Moreover, when the image display window 40 is an operation object, the operation information of the input device 51 is input to the converter 3 via the input processing part 52, the OS processing part 57 and the external communication part 59.

However, when the operation information of the input device 51 is output to the external communication part 59 via the OS processing part 57, it is not possible to output all the operation information. For example, the OS 15a processes specific key operation depending on the hotkey specification that the OS 15a has, and therefore an application such as the image display window 40 cannot acquire the specific key operation (for example, the operation of a Windows key). Therefore, a situation that cannot operate the server 2 connected to the converter 3 sufficiently occurs.

For this reason, in the present embodiment, the PC 4 includes a path in which the operation information of the input device 51 is directly output to the external communication part 59 from the input processing part 52 without via the OS processing part 57. Thereby, it is possible to output the specific key operation to the converter 3. Whether the operation information passes through the OS processing part 57 is determined by on or off of the auxiliary input device 18. When the auxiliary input device 18 is on, the operation information is transmitted to the external communication part 59 from the input processing part 52 without via the OS processing part 57. When the auxiliary input device 18 is off, the operation information is transmitted to the external communication part 59 from the input processing part 52 via the OS processing part 57.

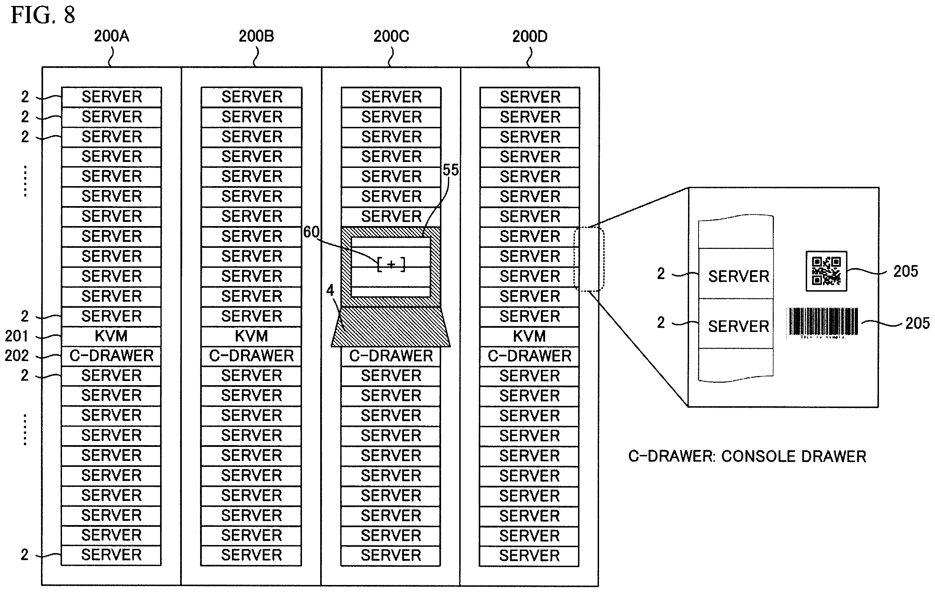

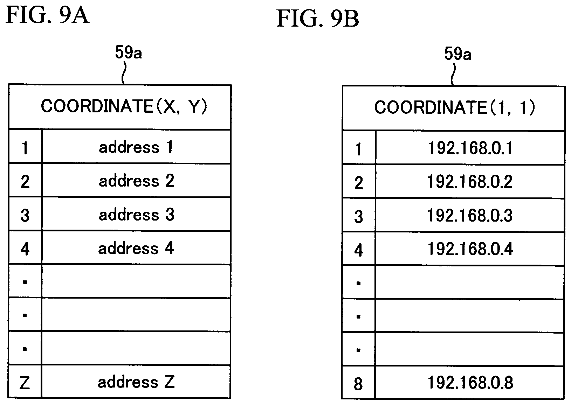

FIG. 8 is a diagram illustrating a method of using the PC 4 at a position in front of the rack. FIGs. 9A and 9B are diagrams illustrating examples of the database 59a stored into the external communication part 59. FIG. 9A illustrates an example of a standardized database 59a, and FIG. 9B illustrates a specific example of the database 59a.

A plurality of racks 200 (200A to 200D) are arranged in a server room as illustrated in FIG. 8, for example. Each rack 200 includes a plurality of servers 2, a KVM switch 201 and a console drawer 202. A bar code 205 is pasted on the front of a column support of each rack 200. The bar code 205 illustrates a position (three-dimensional coordinates) of the adjacent server 2.

Each of the databases 59a of FIGs. 9A and 9B illustrates the XYZ-coordinates of the server 2 and the access information to the server 2 corresponding to the XYZ-coordinates. It is assumed that the XY-coordinates of the server 2 is the same as the XY-coordinates of the rack 200 equipped with the server 2. A number on the left in the database 59a indicates the Z-coordinate of the server 2, and a right address indicates the IP address of the converter 3. This is because, when the converter 3 is the IP-KVM switch, the IP address of the converter 3 is required to access the converter 3 from the PC 4.

The database 59a of FIG. 9B illustrates that the rack 200 in the coordinates (1, 1) is equipped with eight servers 2, the Z-coordinates of the eight servers 2 are 1 to 8, and the IP addresses of the converters 3 corresponding to the eight servers 2 are "192.168.0.1" to "192.168.0.8". Here, when the converter 3 is the IP-KVM switch and the plurality of servers 2 are connected to the single converter 3, the IP-address of the converter 3 and the IP-address of the desired server 2 are input to a right address column of the database 59a to access the desired server 2 via the converter 3.

Returning to FIG. 8, when the worker captures the rack 200 and the server 2 mounted on the rack 200 using the imaging device 53, the video is displayed on the display 55 of the PC 4. When the bar code 205 is captured by overlapping an aim 60 displayed on the screen of the PC 4 onto the bar code 205 corresponding to the desired server 2, the OS processing part 57 analyzes the image of the bar code 205 to acquire the XYZ-coordinates of the desired server 2. The OS processing part 57 accesses the database 59a stored in the external communication part 59 by using the XYZ-coordinates of the desired server 2 as a key, acquires the IP address of the converter 3, and displays the IP address of the converter 3 on the display 55. By specifying the IP address of the converter 3 displayed on the display 55 by the input device 51, the external communication part 59 accesses the desired server 2 via the specified converter 3, and the video information from the desired server 2 is displayed on the display 55.

In the above method, the position of the desired server 2 is acquired by using the bar code 205, but the PC 4 may acquire the position of the desired server 2 by using the position and the inclination of the PC 4 itself. Hereinafter, a description will be given of a method of acquiring the position of the desired server 2 by using the position and the inclination of the PC 4 itself.

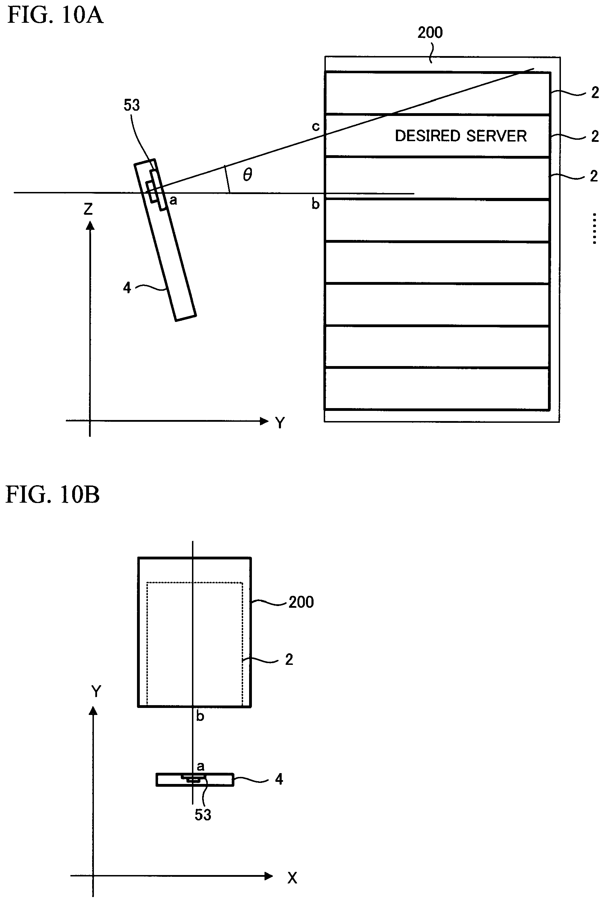

FIG. 10A is a side view illustrating a position relationship between the rack 200 and the PC 4. FIG. 10B is a top view illustrating the position relationship between the rack 200 and the PC 4.

When an instruction is input from the input device 51 in a state of overlapping the aim 60 on the screen of the PC 4 onto the desired server 2, for example, the OS processing part 57 acquires three-dimensional coordinates and an inclination θ of the PC 4 from the position/inclination detection sensor 28. Here, the inclination θ of the imaging device 53 is the same as that of the PC 4. The database 59a stored in the external communication part 59 has coordinate information of each server and the rack 200 as illustrated in FIGs. 9A and 9B.

Since the OS processing part 57 can acquire the XY- coordinates of the PC 4 and the inclination θ of the imaging device 53 from the position/inclination detection sensor 28, the OS processing part 57 can identify the XY-coordinates of the rack 200 which is on the extension of the straight line AB and on which the desired server 2 is mounted. (i) When a range sensor is included in the position/inclination detection sensor 28, a distance between the straight line AB may be measured by the ranging sensor, (ii) Firstly, by aligning the aim at the lower end of the rack 200, a distance between the straight line AB may be measured with the use of the Z-coordinate of the PC 4, the inclination θ of the imaging device 53 and trigonometry. Alternatively, (iii) by searching the coordinates of the rack 200 in the database 59a with the X-coordinate of the PC 4 as a key and by setting data having the Y-coordinate closest to the Y-coordinate of the PC 4 as the coordinates of the rack 200, the distance between the straight line AB may be measured. Here, in FIG. 10B, even when the rack 200 and the PC 4 are not arranged in parallel, the distance between the straight line AB can be accurately detected using the inclination θ of the imaging device 53 and the trigonometry.

Moreover, the OS processing part 57 acquires the Z-coordinate of the desired server 2 intersecting with a straight line AC based on the inclination θ of the imaging device 53, the distance between the straight line AB and the trigonometry. Therefore, the OS processing part 57 can acquire the XYZ-coordinates of the desired server 2. Since the processing after the XYZ-coordinates of the desired server 2 is acquired is the same as the processing after the XYZ-coordinates of the server 2 is acquired by using the bar code 205, the description thereof is omitted.

In the above method, the desired server 2 is selected by using the image captured by the imaging device 53 and the position and the inclination of the PC 4. However, since the PC 4 can acquire the position and the inclination of the PC 4, the desired server 2 may be selected by displaying on the display 55 a three-dimensional virtual space image that indicates the server mounted on the rack 200 in the server room and is changed according to the position and inclination of the PC 4. That is, the display 55 displays the three-dimensional virtual space image imitating a scene captured by the imaging device 53. The three-dimensional virtual space image such as a bird's-eye view of the server room, a floor map and/or a diagram illustrating the mounted servers 2 is displayed on the screen of the display 55, and the worker selects the desired server 2 while looking at the image.

The three-dimensional virtual space image is stored into the ROM 14 or the HDD 15. The XYZ-coordinates of each server 2 and access information to each server 2 included in the database 59a of FIGs. 9A and 9B are associated with each server image in the three-dimensional virtual space image. The position and the inclination of the PC 4 are also associated with the three-dimensional virtual space image.

The OS processing part 57 acquires the position and inclination of the PC 4 from the position/inclination detection sensor 28, and outputs the three-dimensional virtual space image according to the position and inclination of the PC 4 to the display 55. When the position and the inclination of the PC 4 are changed, the OS processing part 57 changes the three-dimensional virtual space image in accordance with the change of the position and the inclination of the PC 4, and outputs the changed three-dimensional virtual space image to the display 55.

When the server image corresponding to the desired server 2 in the three-dimensional virtual space image is designated by the input device 51, the OS processing part 57 outputs an instruction to access the desired server 2 to the external communication part 59, and the external communication part 59 accesses the desired server 2 based on the access information to the desired server 2 in the database 59a.

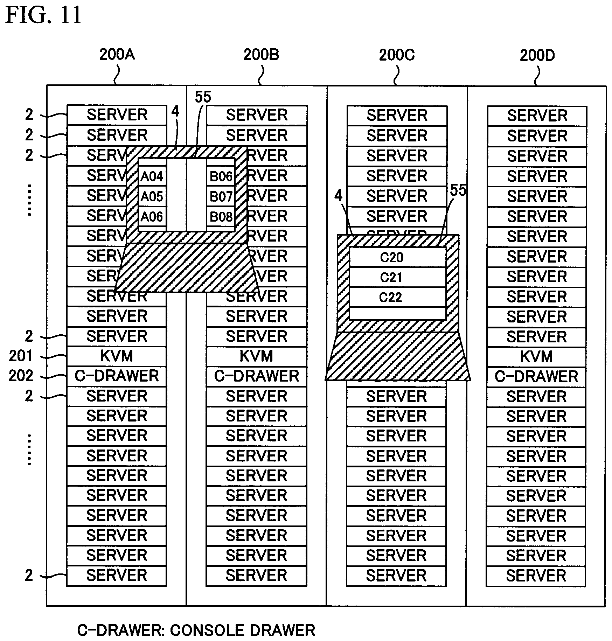

For example, when the worker captures the server 2 using the imaging device 53 as described above, as long as an ID and a name of the server 2 are not described on the housing of the server 2, the worker cannot know the ID and the name of the server 2. In particular, in the data center, the ID and the name are not often described on the housing of each server from the viewpoint of security. However, when the three-dimensional virtual space image is used, the name or ID (e.g. A04-A06, B06-B08, C20-C22 of FIG. 11) of each server can be displayed on the display 55 of the PC 4 as illustrated in FIG. 11, and hence the worker can easily check the ID or the name of the server 2.

Therefore, when the worker is in a large data center where a large number of racks 200 on which the plurality of servers 2 having the same specification are mounted are provided, the worker can look at the three-dimensional virtual space image, identify the position of the worker, can check the position of the desired server 2, and specify the desired server 2 without hesitation.

As described above, according to the present embodiment, the PC 4 includes: the imaging device 53 that captures an identifier indicating the position of the server 2 which is given to the rack 200 for each server 2; the database 59a that associates the position of the server 2 and the access information to the server 2 with each other; the OS processing part 57 that detects the position of the server 2 from the identifier captured by the imaging device 53; and the external communication part 59 that reads, from the database 59a, the access information to the server 2 associated with the position of the detected server, and accesses the server 2. Therefore, it is possible to easily find the desired server from the rack group including the plurality of racks each of which is equipped with the plurality of servers having the same specification.

Moreover, the PC 4 includes: the imaging device 53 that captures the server 2; the position/inclination detection sensor 28 that detects the position and the inclination of the PC 4; the OS processing part 57 that detects the position of the server 2 captured by the imaging device 53 by using the position and the inclination of the PC 4 detected by the position/inclination detection sensor 28; the database 59a that associates the position of the server 2 and the access information to the server 2 with each other; the external communication part 59 that reads, from the database 59a, the access information to the server 2 associated with the position of the server detected by the OS processing part 57, and accesses the server 2. Therefore, even when the identifier indicating the position of the server 2 is not given to the rack 200, it is possible to easily find the desired server from the rack group including the plurality of racks each of which is equipped with the plurality of servers.

Moreover, the PC 4 includes: the position/inclination detection sensor 28 that detects the position and the inclination of the PC 4; the database 59a that associates the position of the server 2 and the access information to the server 2 with each other; the display 55 that displays the three-dimensional virtual space image which imitates the scene captured by the imaging device 53, and is associated with the position and the inclination of the PC 4 detected by the position/inclination detection sensor 28 and the position of the server 2 and the access information to the server 2 in the database 59a; the OS processing part 57 that changes the three-dimensional virtual space image in accordance with the position and the inclination of the PC 4 detected by the position/inclination detection sensor 28 and outputs the changed three-dimensional virtual space image to the display 55; and the external communication part 59 that, when the server image in the three-dimensional virtual space image displayed on the display 55 is designated, reads the access information to the server 2 corresponding to the server image from the database 59a, and accesses the server 2. Therefore, even when the PC 4 does not include the imaging device 53, it is possible to easily find the desired server from the rack group including the plurality of racks each of which is equipped with the plurality of servers. Moreover, to easily find the desired server, it is also possible to describe the ID or the name of the server 2 on the image of the server 2 included in the three-dimensional virtual space image.

Some preferred embodiments of the present invention have been described in detail, but the present invention is not limited to these specifically described embodiments but may have various variations and alterations within the scope of the claimed invention.

In any of the above aspects, the various features may be implemented in hardware, or as software modules running on one or more processors. Features of one aspect may be applied to any of the other aspects.

## Claims

1. An information processing apparatus (4) comprising:
a transmission and reception means (32) configured to receive video information from a plurality of servers (2) and transmit operation information to the plurality of servers (2);
a first output means (33) configured to directly output the video information received from any one of the servers (2) to a selection means (35);
a synthesis means (34) configured to convert the video information received from each of the servers (2) into individual first images, and synthesize a synthesized image by synthesizing a plurality of first windows (40), each of which displays a corresponding one of the first images, and a plurality of second windows (41), each of which is used to input the operation information to a corresponding one of the plurality of servers (2), with a second image (42) of an operation screen; and
the selection means (35) configured to select any one of the video information output from the first output means (33) or the synthesized image, and output the selected video information or the synthesized image to a display (21).

2. The information processing apparatus (4) as claimed in claim 1, further comprising:
an input device (22, 23) configured to input the operation information;
an instruction device (18) configured to instruct an output destination of the operation information; and
a second output means (36) configured to output the operation information to any one of the communicator (32) or the second window (41) in accordance with an instruction from the instruction device (18).

3. The information processing apparatus (4) as claimed in any of claims 1 and 2, further comprising:
an imaging device (53) configured to capture an identifier indicating a position of a server (2);
a storage means (14, 15, 59) configured to store a database (59a) including the position of the server and access information to the server associated with each other;
a detection means (57) configured to detect the position of the server from the identifier captured by the imaging device (53); and
an access means (59) configured to read, from the database (59a), the access information to the server associated with the position of the server detected by the detection means (57), and access the server (2).

4. The information processing apparatus (4) as claimed in any of claims 1 and 2, further comprising:
an imaging device (53) configured to capture a server (2);
a sensor (28) configured to detect a position and an inclination of the information processing apparatus (4);
a detection means (57) configured to detect a position of the server captured by the imaging device (53) by using the position and the inclination of the information processing apparatus detected by the sensor (28);
a storage means (14, 15, 59) configured to store a database (59a) including the position of the server and access information to the server associated with each other; and
an access means (59) configured to read, from the database, the access information to the server associated with the position of the server detected by the detection means (57), and access the server.

5. The information processing apparatus (4) as claimed in any of claims 1 and 2, further comprising:
a sensor (28) configured to detect a position and an inclination of the information processing apparatus (4);
a storage means (14, 15, 59) configured to store a database (59a) including a position of a server (2) and access information to the server associated with each other;
a display (55) configured to display a virtual space image which imitates a scene captured by an imaging device (53), the virtual space image being associated with a position and an inclination of the information processing apparatus detected by the sensor and the position of the server and the access information to the server in the database;
a display controlling means (57) configured to change the virtual space image in accordance with the position and the inclination of the information processing apparatus detected by the sensor (28), and output the changed virtual space image to the display (55); and
an access means (59) configured to, when a server image in the virtual space image displayed on the display is designated, read the access information to the server corresponding to the server image from the database (59a), and access the server.

## Patentansprüche

1. Informationsverarbeitungsvorrichtung (4), umfassend:
eine Sende- und Empfangseinrichtung (32), die konfiguriert ist, um Videoinformationen von einer Vielzahl von Servern (2) zu empfangen und Betriebsinformation an die Vielzahl von Servern (2) zu senden;
eine erste Ausgabeeinrichtung (33), die konfiguriert ist, um die von einem der Server (2) empfangenen Videoinformation direkt an eine Auswahleinrichtung (35) auszugeben;
eine Syntheseeinrichtung (34), die konfiguriert ist, um die von jedem der Server (2) empfangene Videoinformation in einzelne erste Bilder umzuwandeln und ein synthetisiertes Bild zu synthetisieren, indem sie eine Vielzahl von ersten Fenstern (40) synthetisiert, wovon jedes ein entsprechendes der ersten Bilder anzeigt, und eine Vielzahl von zweiten Fenstern (41) synthetisiert, wovon jedes dazu verwendet wird, die Betriebsinformation in einen entsprechenden der Vielzahl von Servern mit einem zweiten Bild (42) eines Betriebsbildschirms einzugeben; und
wobei die Auswahleinrichtung (35) konfiguriert ist, um eine der von der ersten Ausgabeeinrichtung (33) ausgegebenen Videoinformation oder das synthetisierte Bild auszuwählen und die ausgewählte Videoinformation oder das synthetisierte Bild an eine Anzeige (21) auszugeben.

2. Informationsverarbeitungsapparat (4) gemäß Anspruch 1, ferner umfassend:
ein Eingabegerät (22, 23), das konfiguriert ist, um die Betriebsinformation einzugeben;
ein Anweisungsgerät (18), das konfiguriert ist, um ein Ausgabeziel der Betriebsinformation anzuweisen; und
eine zweite Ausgabeeinrichtung (36), die konfiguriert ist, um die Betriebsinformation gemäß einer Anweisung von der Anweisungsvorrichtung (18) an eines von dem Kommunikator (32) oder dem zweiten Fenster (41) auszugeben.

3. Informationsverarbeitungsvorrichtung (4) gemäß einem der Ansprüche 1 und 2, ferner umfassend:
ein Bildgebungsgerät (53), das konfiguriert ist, um eine Kennung zu erfassen, die eine Position eines Servers (2) angibt;
eine Speichereinrichtung (14, 15, 59), die konfiguriert ist, um eine Datenbank (59a) einschließlich der Position des Servers und Zugriffsinformation auf den Server, die miteinander assoziiert sind, zu speichern;
eine Erkennungseinrichtung (57), die konfiguriert ist, um die Position des Servers anhand der von dem Bildgebungsgerät (53) erfassten Kennung zu erkennen; und
eine Zugriffseinrichtung (59), die konfiguriert ist, um aus der Datenbank (59a) die Zugriffsinformation zu dem Server zu lesen, die mit der von dem Erfassungsmittel (57) erfassten Position des Servers assoziiert ist, und auf den Server (2) zuzugreifen.

4. Informationsverarbeitungsvorrichtung (4) gemäß einem der Ansprüche 1 und 2, ferner umfassend:
ein Bildgebungsgerät (53), das konfiguriert ist, um einen Server (2) zu erfassen;
einen Sensor (28), der konfiguriert ist, um eine Position und eine Neigung der Informationsverarbeitungsvorrichtung (4) zu erkennen;
eine Erfassungseinrichtung (57), die konfiguriert ist, um eine Position des Servers, die von dem Bildgebungsgerät (53) erfasst wird, unter Verwendung der Position und der Neigung der Informationsverarbeitungsvorrichtung, die von dem Sensor (28) erkannt wird, zu erkennen;
eine Speichereinrichtung (14, 15, 59), die konfiguriert ist, um eine Datenbank (59a) einschließlich der Position des Servers und Zugriffsinformation auf den Server, die miteinander assoziiert sind, zu speichern; und
eine Zugriffseinrichtung (59), die konfiguriert ist, um aus der Datenbank (59a) die Zugriffsinformation zu dem Server zu lesen, die mit der von dem Erfassungsmittel (57) erfassten Position des Servers assoziiert ist, und auf den Server (2) zuzugreifen.

5. Informationsverarbeitungsvorrichtung (4) gemäß einem der Ansprüche 1 und 2, ferner umfassend:
einen Sensor (28), der konfiguriert ist, um eine Position und eine Neigung der Informationsverarbeitungsvorrichtung (4) zu erkennen;
eine Speichereinrichtung (14, 15, 59), die konfiguriert ist, um eine Datenbank (59a) einschließlich einer Position eines Servers (2) und Zugriffsinformation auf den Server, die miteinander assoziiert sind, zu speichern;
eine Anzeige (55), die konfiguriert ist, um ein virtuelles Raumbild anzuzeigen, das eine von einem Bildgebungsgerät (53) erfasste Szene imitiert, wobei das virtuelle Raumbild mit einer Position und einer Neigung der Informationsverarbeitungsvorrichtung, die von dem Sensor erfasst werden, und der Position des Servers und der Zugriffsinformationen zu dem Server in der Datenbank assoziiert ist;
eine Anzeigesteuereinrichtung (57), die konfiguriert ist, um das virtuelle Raumbild entsprechend der Position und der Neigung der Informationsverarbeitungsvorrichtung, die von dem Sensor (28) erfasst wird, zu ändern und das geänderte virtuelle Raumbild an die Anzeige (55) auszugeben; und
eine Zugriffseinrichtung (59), die konfiguriert ist, um, wenn ein Server-Bild in dem auf der Anzeige angezeigten virtuellen Raumbild bestimmt wird, die mit dem Server-Bild assoziierte Zugriffsinformation zu dem Server aus der Datenbank (59a) zu lesen und auf den Server zuzugreifen.

## Revendications

1. Un appareil de traitement d'informations (4) comprenant :
un moyen de transmission et de réception (32) configuré pour recevoir des informations vidéo à partir d'une pluralité de serveurs (2) et transmettre des informations de fonctionnement à la pluralité de serveurs (2) ;
un premier moyen de sortie (33) configuré pour émettre directement les informations vidéo reçues de l'un quelconque des serveurs (2) vers un moyen de sélection (35) ;
un moyen de synthèse (34) configuré pour convertir les informations vidéo reçues de chacun des serveurs (2) en premières images individuelles, et synthétiser une image synthétisée en synthétisant une pluralité de premières fenêtres (40), dont chacune affiche une image correspondante parmi les premières images, et une pluralité de deuxièmes fenêtres (41), dont chacune est utilisée pour entrer les informations de fonctionnement dans un serveur correspondant parmi la pluralité de serveurs (2) avec une deuxième image (42) d'un écran de fonctionnement ; et
le moyen de sélection (35) configuré pour sélectionner l'une quelconque des informations vidéo émises à partir du premier moyen de sortie (33) ou l'image synthétisée, et émettre les informations vidéo sélectionnées ou l'image synthétisée vers un écran (21).

2. L'appareil de traitement d'informations (4) selon la revendication 1, comprenant en outre :
un dispositif d'entrée (22, 23) configuré pour entrer les informations de fonctionnement ;
un dispositif d'instruction (18) configuré pour ordonner une destination de sortie des informations de fonctionnement ; et
un deuxième moyen de sortie (36) configuré pour émettre les informations de fonctionnement vers l'un quelconque du communicateur (32) ou de la deuxième fenêtre (41) en fonction d'une instruction à partir du dispositif d'instruction (18).

3. L'appareil de traitement d'informations (4) selon l'une quelconque des revendications 1 et 2, comprenant en outre :
un dispositif d'imagerie (53) configuré pour capturer un identifiant indiquant une position d'un serveur (2) ;
un moyen de stockage (14, 15, 59) configuré pour stocker une base de données (59a) comprenant la position du serveur et des informations d'accès au serveur associées les unes aux autres ;
un moyen de détection (57) configuré pour détecter la position du serveur à partir de l'identifiant capturé par le dispositif d'imagerie (53) ; et
un moyen d'accès (59) configuré pour lire, à partir de la base de données (59a), les informations d'accès au serveur associées à la position du serveur détectée par le moyen de détection (57), et accéder au serveur (2).

4. L'appareil de traitement d'informations (4) selon l'une quelconque des revendications 1 et 2, comprenant en outre :
un dispositif d'imagerie (53) configuré pour capturer un serveur (2) ;
un capteur (28) configuré pour détecter une position et une inclinaison de l'appareil de traitement d'informations (4) ;
un moyen de détection (57) configuré pour détecter une position du serveur capturée par le dispositif d'imagerie (53) en utilisant la position et l'inclinaison de l'appareil de traitement d'informations détectées par le capteur (28) ;
un moyen de stockage (14, 15, 59) configuré pour stocker une base de données (59a) comprenant la position du serveur et des informations d'accès au serveur associées les unes aux autres ; et
un moyen d'accès (59) configuré pour lire, à partir de la base de données, les informations d'accès au serveur associées à la position du serveur détectée par le moyen de détection (57), et accéder au serveur.

5. L'appareil de traitement d'informations (4) selon l'une quelconque des revendications 1 et 2, comprenant en outre :
un capteur (28) configuré pour détecter une position et une inclinaison de l'appareil de traitement d'informations (4) ;
un moyen de stockage (14, 15, 59) configuré pour stocker une base de données (59a) comprenant une position d'un serveur (2) et des informations d'accès au serveur associées les unes aux autres ;
un écran (55) configuré pour afficher une image d'espace virtuel qui imite une scène capturée par un dispositif d'imagerie (53), l'image d'espace virtuel étant associée à une position et à une inclinaison de l'appareil de traitement d'informations détectées par le capteur et à la position du serveur et aux informations d'accès au serveur dans la base de données ;
un moyen de contrôle d'affichage (57) configuré pour modifier l'image d'espace virtuel en fonction de la position et de l'inclinaison de l'appareil de traitement d'informations détectées par le capteur (28), et pour émettre l'image d'espace virtuel modifiée vers l'écran (55) ; et
un moyen d'accès (59) configuré pour, lorsqu'une image de serveur dans l'image d'espace virtuel affichée sur l'écran est désignée, lire les informations d'accès au serveur correspondant à l'image de serveur à partir de la base de données (59a), et accéder au serveur.
